# EUROPEAN PATENT APPLICATION

(11) **EP 4 068 124 A1**
(43) Date of publication of application: **05.10.2022**
(21) Application number: 20892000.9
(22) Date of filing: 07.10.2020
(51) Int. Cl.: G06F 21/31, H04L 9/10

(54) **INFORMATION PROCESSING DEVICE, INFORMATION PROCESSING METHOD, AUTHENTICATION DEVICE, AUTHENTICATION METHOD, AUTHENTICATION SYSTEM, AUTHENTICATION METHOD IN AUTHENTICATION SYSTEM, AND COMPUTER PROGRAM**

(30) Priority: 29.11.2019 JP 2019217540
(71) Applicant: FeliCa Networks, Inc., Tokyo 141-0032 (JP)
(72) Inventor: WATANABE, Keitarou, Tokyo 141-0032 (JP)
(74) Representative: D Young & Co LLP
(86) International application number: PCT/JP2020/038052
(87) International publication number: WO 2021/106381

(57) **Abstract**

An information processing apparatus that performs multifactor and multistage authentication procedures is to be provided.

An information processing apparatus includes: an authentication procedure processing unit that performs an authentication procedure on an external device, using a tamper-resistant secure element; and a control unit that controls a process for multistage authentication of the external device, the multistage authentication including the authentication procedure. The control unit controls a process of a second authentication procedure using the identification information about the secure element, the identification information being associated with the user account information. The control unit controls execution of the second authentication procedure during an operation in the login authentication procedure.

## Description

### TECHNICAL FIELD

The technology disclosed in the present specification (the technology will be hereinafter referred to as "the present disclosure") relates to an information processing apparatus and an information processing method for performing an authentication procedure, an authentication device and an authentication method for performing a secure element authentication process, an authentication system in which an authentication device performs authentication of an information terminal, an authentication method in an authentication system, and a computer program.

### BACKGROUND ART

User authentication using user account information including a user ID, a password, and the like is normally performed in an action (a login) in which a value and an individual in a cloud are identified, among various scenes such as a scene where a payment for online shopping is made. Since there is also a security risk that user authentication is broken by a brute-force attack on the password or the like, multifactor authentication in which a factor other than the user ID and the password is added, and multistage authentication in which authentication is performed a plurality of times using the same factor or different factors has been recently introduced.

For example, an individual multiple-stage authentication method and a system therefor have been suggested. The system includes: a first-stage authentication unit that uses an ID and a password; and a user-specific second-stage authentication unit that determines the second-stage authentication methods defined for the respective users, and performs the second-stage authentication (see Patent Document 1).

### CITATION LIST

### PATENT DOCUMENT

Patent Document 1: Japanese Patent Application Laid-Open No. 2010-67184

### SUMMARY OF THE INVENTION

### PROBLEMS TO BE SOLVED BY THE INVENTION

The present disclosure aims to provide an information processing apparatus and an information processing method for performing a multifactor and multistage authentication procedure, an authentication device and an authentication method for performing multifactor and multistage authentication, an authentication system in which an authentication device performs multifactor and multistage authentication of an information terminal, an authentication method in an authentication system, and a computer program.

### SOLUTIONS TO PROBLEMS

A first aspect of the present disclosure is
an information processing apparatus that includes:
an authentication procedure processing unit that performs an authentication procedure on an external device, using a tamper-resistant secure element; and
a control unit that controls a process for multistage authentication of the external device, the multistage authentication including the authentication procedure.

The control unit controls a process for multistage authentication including a login authentication procedure using user account information and an authentication procedure using the secure element. The control unit also controls a process of a second authentication procedure using the identification information about the secure element, the identification information being associated with the user account information. The control unit performs control to carry out the second authentication procedure during an operation in the login authentication procedure.

In the process of the second authentication procedure, the control unit uses the identification information about the secure element, the identification information being associated with the user account information in a preliminary operation. Alternatively, before the second authentication procedure, the control unit performs control to perform a process of associating the identification information about the secure element with the user account information.

Further, a second aspect of the present disclosure is
an information processing method that includes
the step of performing an authentication procedure on an external device by using a tamper-resistant secure element, in conjunction with a login authentication procedure using user account information.

A third aspect of the present disclosure is
a computer program that is written in a computer-readable format to cause a computer to function as:
an authentication procedure processing unit that performs an authentication procedure on an external device, using a tamper-resistant secure element; and
a control unit that controls a process for multistage authentication of the external device, the multistage authentication including the authentication procedure.

The computer program according to the third aspect defines a computer program written in a computer-readable format so as to enable a predetermined process in a computer. In other words, as the computer program according to the third aspect is installed into a computer, cooperative actions are caused in the computer, and effects similar to those of the information processing apparatus according to the first aspect can be achieved.

Further, a fourth aspect of the present disclosure is
an authentication device that includes:
an authentication unit that performs authentication on a secure element of a user who logs in to a first device; and
a confirmation unit that confirms association between identification information about the secure element that is successfully authenticated and user account information about the user.

When association between the identification information about the secure element and the user account information about the user is successfully confirmed, the user is permitted to log in to the first device.

The confirmation unit performs the confirmation on the basis of a management device that stores association information regarding the user account information about the user and the identification information about the secure element. The authentication device according to the fourth aspect may further includes a registration unit that registers, in the management device, the association information regarding the user account information about the user who logs in to the first device and the identification information about the secure element of the user.

Further, a fifth aspect of the present disclosure is
an authentication method that includes:
an authentication step of performing authentication on a secure element of a user who logs in to a first device; and
a confirmation step of confirming association between identification information about the secure element that is successfully authenticated and user account information about the user.

Further, a sixth aspect of the present disclosure is
a computer program that is written in a computer-readable format to cause a computer to function as:
an authentication unit that performs authentication on a secure element of a user who logs in to a first device; and
a confirmation unit that confirms association between identification information about the secure element that is successfully authenticated and user account information about the user.

The computer program according to the sixth aspect defines a computer program written in a computer-readable format so as to enable a predetermined process in a computer. In other words, as the computer program according to the sixth aspect is installed into a computer, cooperative actions are caused in the computer, and effects similar to those of the authentication device according to the fourth aspect can be achieved.

Further, a seventh aspect of the present disclosure is
an authentication system that includes:
an information terminal of a user who possesses a tamper-resistant secure element; and
an authentication device that authenticates the user,
in which, when the user logs in to a first device, the authentication device confirms authentication of the secure element, and association between the secure element and user account information about the user.

Note that the term "system" means a logical assembly of a plurality of devices (or functional modules that realize specific functions), and the respective devices or functional modules are not necessarily in a single housing.

Further, an eighth aspect of the present disclosure is
an authentication method implemented in an authentication system that includes: an information terminal of a user who possesses a tamper-resistant secure element; and an authentication device that authenticates the user,
the authentication method including:
   an authentication step in which the authentication device authenticates the secure element of the user who logs in to a first device; and
   a confirmation step in which the authentication device confirms association between identification information about the secure element that is successfully authenticated and user account information about the user.

### EFFECTS OF THE INVENTION

According to the present disclosure, it is possible to provide an information processing apparatus and an information processing method for performing multifactor and multistage authentication procedures using a secure element, an authentication device and an authentication method for performing multifactor and multistage authentication using a secure element, an authentication system in which an authentication device performs authentication of an information terminal using a secure element, an authentication method implemented in the authentication system, and a computer program.

Note that the advantageous effects described in this specification are merely examples, and the advantageous effects to be brought about by the present disclosure are not limited to them. Furthermore, there are cases where the present disclosure may exhibit additional advantageous effects, in addition to the above described advantageous effects.

Other objects, features, and advantages of the present disclosure will be made apparent by the embodiments described below and the detailed descriptions with reference to the accompanying drawings.

### BRIEF DESCRIPTION OF DRAWINGS

Fig. 1 is a diagram showing an example functional configuration of a user authentication system 100.
Fig. 2 is a chart schematically illustrating a process of implementing two-factor and two-stage authentication in the user authentication system 100.
Fig. 3 is a diagram showing a modification of the user terminal 110.
Fig. 4 is a diagram showing another modification of the user terminal 110.
Fig. 5 is a diagram showing yet another modification of the user terminal 110.
Fig. 6 is a chart illustrating an example of the sequence in a first phase.
Fig. 7 is a chart illustrating another example of the sequence in the first phase.
Fig. 8 is a chart illustrating yet another example of the sequence in the first phase.
Fig. 9 is a chart illustrating a sequence in a second phase.
Fig. 10 is a chart illustrating another sequence in the second phase.
Fig. 11 is a chart illustrating yet another sequence in the second phase.
Fig. 12 is a chart illustrating still another sequence in the second phase.
Fig. 13 is a chart illustrating yet another sequence in the second phase.

### MODE FOR CARRYING OUT THE INVENTION

The following is a detailed description of embodiments according to the present disclosure, with reference to the drawings.

For example, two-factor authentication in which IP address authentication is combined with a user ID and a password is known. IP address authentication is a mechanism for authenticating the authenticity of a user by checking a route, but it is considered that impersonation is relatively easy in that mechanism. Therefore, security cannot be guaranteed enough by two-factor authentication using IP address authentication.

Also, two-stage authentication is known. In two-stage authentication, an authentication procedure of inputting an authentication code such as a temporary password using a short message service (SMS) or e-mail is added to an authentication procedure using a user ID and a password. However, "SMS interception", which is interception of other people's SMS, is recommended against by the National Institute of Standards and Technology (NIST), and an authentication code sent through an SMS may be read by a third party. SMS authentication also has the problem of high cost. As for e-mail, there is a possibility that the e-mail password will be stolen, for example. Therefore, e-mail also has a security risk similar to that of the first-stage authentication procedure using the user ID and the password.

Meanwhile, a two-stage authentication application for a multifunctional information terminal such as a smartphone has also been developed. This kind of application provides a code of a predetermined number of digits that must be input together with user account information that includes a user ID and a password, for example. However, since the information corresponding to a private key is stored in the application, there is a risk of leakage due to vulnerability of the operating system (OS) or the like.

On the other hand, the present disclosure contributes to robustness of user authentication by using a secure element in multifactor authentication and multistage authentication.

Here, a secure element is a device protected by tamper-resistant hardware, such as an "IC card" or an "IC chip". Tamper-resistance means that internal analysis (reverse engineering) and modification of an IC card or an IC chip is extremely difficult, and is achieved by logical means such as obfuscation to hinder analysis, or physical means such as a circuit that is destroyed when its protective layer is removed. Further, a secure element includes a private key, and can perform non-interceptable secure communication with a predetermined external server or the like.

In the embodiment described below, two-factor and two-stage authentication that includes authentication using a user ID and a password, and authentication using a secure element is performed. However, an embodiment may relate to two-factor and two-stage authentication in which authentication using a secure element is combined with a factor other than a user ID and a password, or multifactor and multistage authentication in which authentication using a secure element is combined with two or more factors.

Also, in the embodiment described below, two-stage authentication is performed in the order of authentication based on user account information such as a user ID and a password, and authentication using a secure element, for sake of convenience. However, the order of authentication may be reversed. Authentication using a secure element may be combined with two or more other factors, and multistage authentication may be performed in any appropriate order.

### A. Example System Configuration

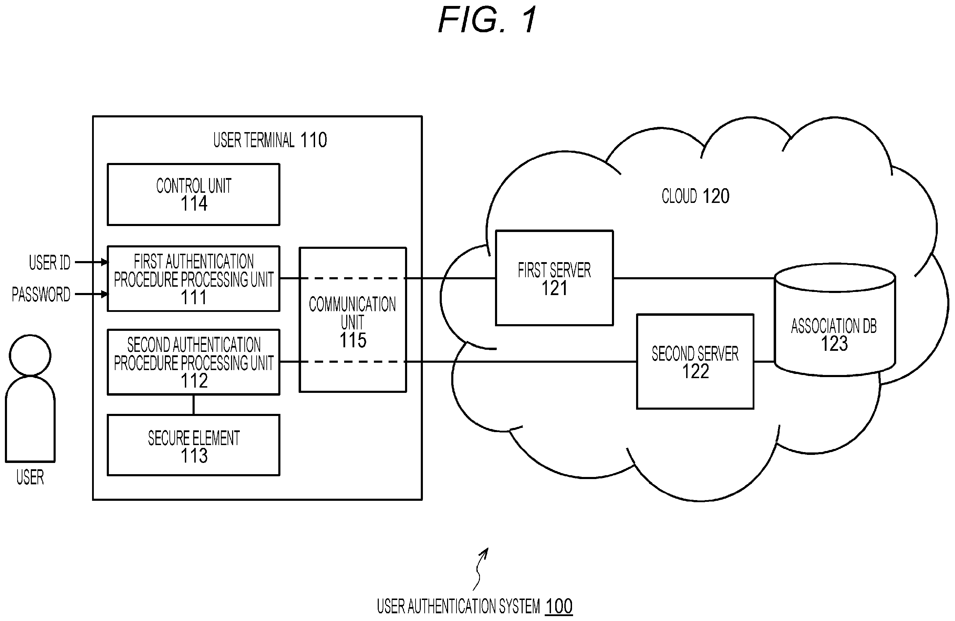

Fig. 1 schematically shows an example functional configuration of a user authentication system 100 that performs two-factor and two-stage authentication to which the present disclosure is applied. The user authentication system 100 shown in the drawing includes a user terminal 110 and a cloud 120. Here, a scene in which a user makes a payment, such as net shopping using the user terminal 110, is described.

The user terminal 110 includes a first authentication procedure processing unit 111, a second authentication procedure processing unit 112, a secure element 113, a control unit 114, and a communication unit 115.

The first authentication procedure processing unit 111 uses user account information including a user ID, a password, and the like input by the user, to perform procedures for a first authentication process, which is the first factor or the first stage, on the cloud 120. The first authentication procedure processing unit 111 is implemented as an application such as a browser that performs a website operation such as browsing an online shopping site or logging in to it at a time of payment, for example.

The second authentication procedure processing unit 112 uses information (hereinafter referred to as the "SE identifier" for identifying the secure element 113) in the secure element 113, to perform the procedures for a second authentication process, which is the second factor or the second stage, on the cloud 120. As described above, the secure element 113 is a device protected by tamper-resistant hardware, and stores a private key therein. The second authentication procedure processing unit 112 can securely perform the second authentication processing procedures of the second factor or the second stage on the cloud 120, through secure communication using the private key in the secure element 113. The second authentication procedure processing unit 112 may be a website operation application that implements the first authentication procedure processing unit 111, or may be implemented as a dedicated application that performs processing on the secure element 113 independently of website operations.

The control unit 114 integrally controls the entire operation of the user terminal 110, including the sequence for the authentication processing procedures by the first authentication procedure processing unit 111 and the second authentication procedure processing unit 112.

The communication unit 115 performs communication processing between the user terminal 110 and the cloud 120. The first-factor or the first-stage authentication processing procedures by the first authentication procedure processing unit 111, and the second-factor or the second-stage authentication processing procedures of by the second authentication procedure processing unit 112 are performed via the communication unit 115.

Meanwhile, the cloud 120 includes a first server 121, a second server 122, and an association database 123.

The first server 121 checks the authenticity of the user account information that is transmitted from the first authentication procedure processing unit 111 of the user terminal 110 and includes the user ID, the password, and the like, and performs the first-factor or the first-stage authentication process. The first server 121 is a website that holds the user account information, and, for example, is a website such as an online shopping site operated by an application for website operations such as a browser that operates in the user terminal 110.

The second server 122 holds a private key that can be authenticated with the secure element 113 by end-to-end (E2E). The second server 122 then checks the authenticity of the SE identifier transmitted from the second authentication procedure processing unit 112 of the user terminal 110 through secure communication, and performs the second-factor or the second-stage authentication process.

The association database 123 is a database that associates the user account information (which may be the user IDs, for example) of the respective users with the SE identifiers of the secure elements 113 possessed by the respective users, and manages association information indicating the correspondence relationship between the user account information and the SE identifiers. The first server 121 and the second server 122 can cooperate to perform authentication using the association information registered in the association database 123.

When the second server 122 checks the authenticity of the SE identifier sent from the user terminal 110, and determines the secure element 113 to be authentic, the second server 122 further extracts the user account information associated with the SE identifier by referring to the association database 123, and checks whether the user account information matches the user account information authenticated by the first server 121. In this manner, a two-factor and two-stage authentication process can be performed.

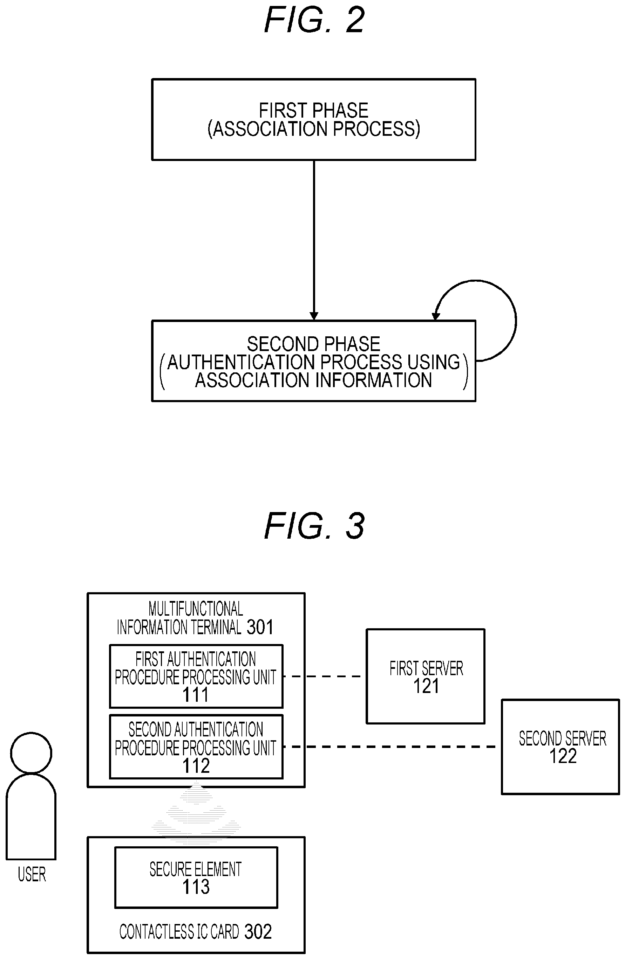

Fig. 2 schematically illustrates a process of implementing two-factor and two-stage authentication in the user authentication system 100. The illustrated implementation process includes two phases: a first phase and a second phase.

In the first phase, a process of registering, in the association database 123 on the side of the cloud 120, association information for associating the user account information about the user on the side of the user terminal 110 with the SE identifier of the secure element 113 possessed by the user is performed. To provide robust two-factor and two-stage authentication using the secure element 113 in the user authentication system 100 according to this embodiment, the user account information and the SE identifier need to be associated with each other beforehand in the first phase.

Note that the SE identifier is information with which an individual can be identified in a secure communication path between the secure element 113 and the second server 122. The SE identifier may be embedded in the secure element 113 at the stage of manufacture of the secure element 113, or may be a value that is written in the secure element 113 while uniqueness is ensured after the secure element 113 is shipped together with the user terminal 110.

Although only one user terminal 110 is shown in Fig. 1 for simplification, there are actually a large number of user terminals in the user authentication system 100, and association information regarding the user account information and the SE identifier of each user terminal (or each user) is registered in the association database 123.

Note that the correspondence relationship between the user account information and the SE identifiers is not limited to one-to-one correspondence. For example, there may be a case where one user terminal (or one user account) is associated with a plurality of SE identifiers (such as a case where one user uses a plurality of secure elements), and a case where a plurality of user terminals is associated with one SE identifier (such as a case where one user uses a plurality of user accounts).

In the second phase, in a case where the user makes a payment in online shopping or the like using the user terminal 110, for example, an action (login or the like) for identifying the value or the individual in the cloud 120 is performed. This embodiment is characterized in that, in the first phase described above, the value and the individual are identified with two factors in two stages using the user account information and the SE identifier associated with each other by the association database 123.

First, the first server 121 checks the authenticity of the user account information that is transmitted from the first authentication procedure processing unit 111 of the user terminal 110 and includes the user ID, the password, and the like. After the authenticity of the user account information is confirmed, the second server 122 checks the authenticity of the SE identifier transmitted from the second authentication procedure processing unit 112 of the user terminal 110 through secure communication. When the second server 122 checks the authenticity of the SE identifier sent from the user terminal 110, and determines the secure element 113 to be authentic, the second server 122 then further extracts the user account information associated with the SE identifier by referring to the association database 123, and checks whether the user account information matches the user account information authenticated by the first server 121. The authentication process with respect to the user then comes to an end.

That is, in the second phase, an authentication process is performed with the use of two factors: authentication of the user account information including the user ID, the password, and the like; and confirmation of the SE identifier associated beforehand with the user account information through secure communication between the secure element 113 and the second server 122. Therefore, even if the user authentication using the user account information is broken due to password leakage, a password brute-force attack, or the like, a login cannot be performed without the authentic secure element 113.

Also, in the second phase, in a case where two-stage authentication is performed with the use of an SMS, e-mail, or a two-stage authentication application at the time of a login using the user account information including the user ID, the password, and the like, it is required to confirm the SE identifier associated beforehand with the user account information through secure communication between the secure element 113 and the second server 122. Therefore, even if an authentication code notified through an SMS is read by a third party, an e-mail password is stolen, or confidential information in an application is leaked due to OS vulnerability, it is not possible to perform a login without the authentic secure element 113.

To provide robust two-factor and two-stage authentication using the secure element 113 in the second phase, the user account information and the SE identifier need to be associated with each other beforehand in the first phase. In a case where the user attempts the second phase (a login or the like) using the user account information that has not been associated beforehand with the SE identifier, the first server 121, which is a website, may request the first authentication procedure processing unit 111 of the user terminal 110 to perform a website operation for the association process in the first phase, for example.

Note that an expiration date may be set for association between the user account information and the SE identifier in the association database 123. For example, flag information indicating that the association information has passed its expiration date may be set, or the association information that is no longer valid may be deleted from the association database 123. Further, in a case where the second phase (a login or the like) is attempted using the user account information whose association information has passed its expiration date, the first server 121, which is a website, may request the user again to perform a website operation for the association process in the first phase, for example.

### B. Modifications of the System

An example of the user terminal 110 is a multifunctional information terminal such as a smartphone. However, although the user terminal 110 is illustrated as a single device in Fig. 1, there are cases where the functions of the user terminal 110 may be achieved with a plurality of apparatuses or devices possessed by the user.

Fig. 3 shows a modification of the user terminal 110. In the example shown in the drawing, the user terminal 110 is designed to be separated into two devices: a multifunctional information terminal 301 such as a smartphone, and a contactless IC card 302 as the secure element 113. The multifunctional information terminal 301 has the functions of the first authentication procedure processing unit 111 and the second authentication procedure processing unit 112, and the functions of the communication unit 115 (not shown in Fig. 3) that communicates with the cloud 120.

The first authentication procedure processing unit 111 in the multifunctional information terminal 301 is a browser application that operates in the smartphone 301, for example, performs website operations such as browsing of an online shopping site and a login at the time of payment, and performs the first authentication processing procedures for login authentication regarding the first server 121, using the user account information including the user ID, the password, and the like that have been input from the user at the time of the login.

The second authentication procedure processing unit 112 in the multifunctional information terminal 301 accesses the contactless IC card 302, and performs the second authentication processing procedures on the second server 122, to check the authenticity of the SE identifier held in the contactless IC card 302 through secure communication using the private key stored in the contactless IC card 302. The second authentication procedure processing unit 112 (or the multifunctional information terminal 301) also has a contactless communication function (a card reading function) for accessing the contactless IC card 112. Note that, for contactless communication, a communication method compliant with a short-distance wireless communication standard such as Near Field Communication (NFC) can be used, but detailed explanation thereof is not made herein.

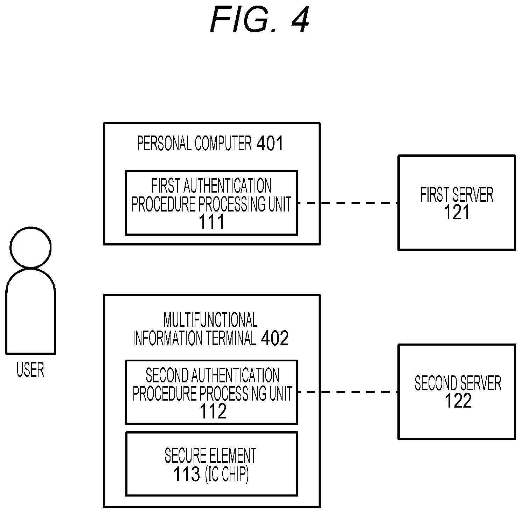

Also, Fig. 4 shows another modification of the user terminal 110. In the example shown in the drawing, the user terminal 110 is designed to be separated into two devices: a personal computer 401 and a multifunctional information terminal 402 such as a smartphone. The personal computer 401 has the functions of the first authentication procedure processing unit 111. Meanwhile, the smartphone 402 has the functions of the second authentication procedure processing unit 112 and the secure element 113 formed with an IC chip or the like. The personal computer 401 and the multifunctional information terminal 402 each have the functions of the communication unit 115 (not shown in Fig. 4) that communicates with the cloud 120. Note that any communication function is not necessary between the personal computer 401 and the multifunctional information terminal 402.

The first authentication procedure processing unit 111 is a browser application that operates in the personal computer 401, for example, performs website operations such as browsing of an online shopping site and a login at the time of payment, and performs the first authentication processing procedures for login authentication regarding the first server 121, using the user account information including the user ID, the password, and the like that have been input from the user at the time of the login.

Meanwhile, in the multifunctional information terminal 402, the second authentication procedure processing unit 112 accesses the secure element 113, and performs the second authentication processing procedures on the second server 122, to check the authenticity of the SE identifier held in the secure element 113 through secure communication using the private key stored in the secure element 113.

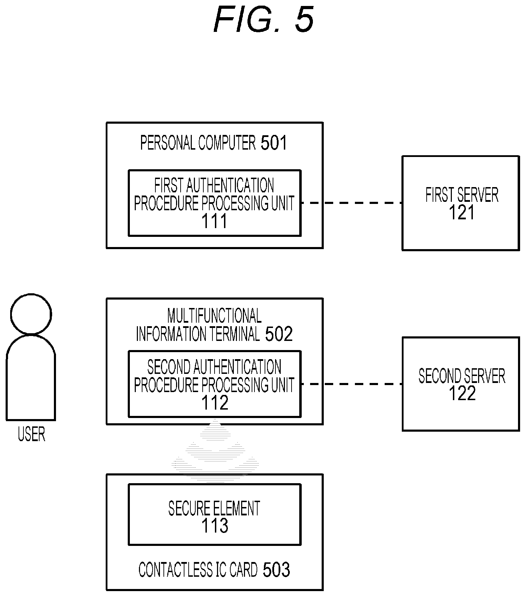

Further, Fig. 5 shows yet another modification of the user terminal 110. In the example shown in the drawing, the user terminal 110 is designed to be separated into three devices: a personal computer 501, a multifunctional information terminal 502 such as a smartphone, and a contactless IC card 503 as the secure element 113. The personal computer 501 has the functions of the first authentication procedure processing unit 111, and the multifunctional information terminal 502 has the functions of the second authentication procedure processing unit 112. The personal computer 501 and the multifunctional information terminal 502 each have the functions of the communication unit 115 (not shown in Fig. 5) that communicates with the cloud 120. The multifunctional information terminal 502 also has a contactless communication function (the same as above) compliant with the NFC communication scheme for accessing the contactless IC card 503, for example. Note that any communication function is not necessary between the personal computer 501 and the multifunctional information terminal 502.

The first authentication procedure processing unit 111 is a browser application that operates in the personal computer 501, for example, performs website operations such as browsing of an online shopping site and a login at the time of payment, and performs the first authentication processing procedures for login authentication regarding the first server 121, using the user account information including the user ID, the password, and the like that have been input from the user at the time of the login.

The second authentication procedure processing unit 112 in the multifunctional information terminal 502 accesses the contactless IC card 503, and performs the second authentication processing procedures on the second server 122, to check the authenticity of the SE identifier held in the contactless IC card 503 through secure communication using the private key stored in the contactless IC card 503.

Further, although the first server 121, the second server 122, and the association database 123 are illustrated as different devices in Fig. 1, the configurations of these devices are not limited to this. The association database 123 may be provided in the first server 121, the association database 123 may be provided in the second server 122, or the first server 121, the second server 122, and the association database 123 may be designed as a single device.

### C. Example Sequence in the First Phase

To provide robust two-factor and two-stage authentication using the secure element 113 in the user authentication system 100 according to this embodiment, the user account information and the SE identifier need to be associated with each other beforehand in the first phase. Examples of methods for associating the user account information with the SE identifier include the two methods: a method for registering the association information in the association database 123 in a preliminary operation; and a method for performing an association process, after a user account is created or a login with a user account is performed.

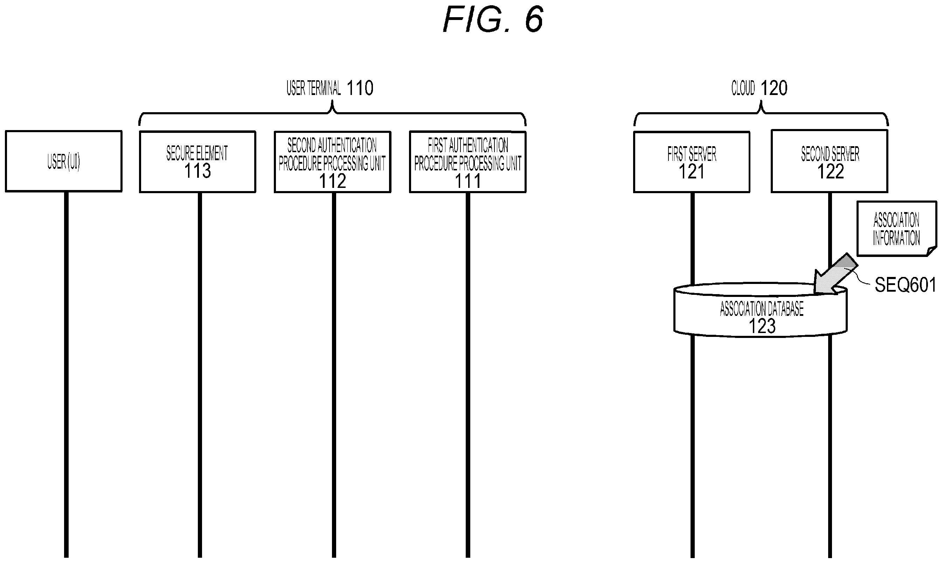

Fig. 6 shows an example sequence in the first phase. In the example sequence shown in the chart, the association information about the user account information (the user ID and the like) and the SE identifier is registered in the association database 123 in a preliminary operation (SEQ601). For example, when association information for associating the user account information with the SE identifier is obtained through reporting by telephone or the like from the user or an operation (an over-the-counter operation or the like) at the time of selling of a device (a smartphone or the like) equipped with the secure element 113, the association information is registered in the association database 123. At that time, the identity of the reporting user or the user at the counter is confirmed, and the user account information is then associated with the SE identifier.

In the association database 123, the correspondence relationship between the user account information and the SE identifiers is not limited to one-to-one correspondence. There may be a case where one user terminal (or one user account) is associated with a plurality of SE identifiers, or there may be a case where a plurality of user terminals (or a plurality of user accounts) is associated with one SE identifier.

The first server 121 and the second server 122 can perform authentication using the association information registered in the association database 123. The first server 121 may include the association database 123, or the second server 122 may include the association database 123. Alternatively, the first server 121, the second server 122, and the association database 123 may be designed as a single device.

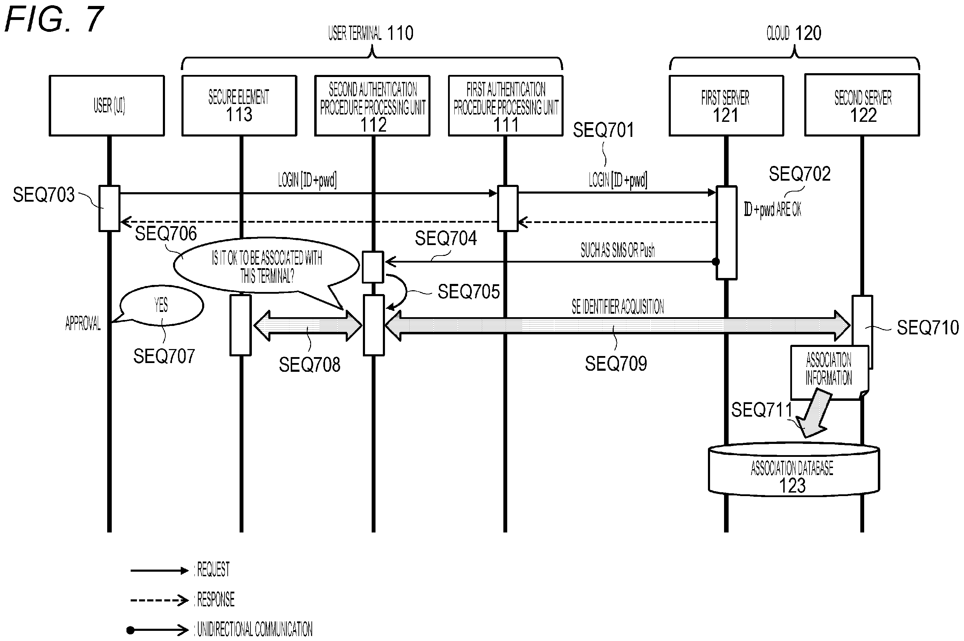

Fig. 7 shows another example sequence in the first phase. In the example sequence shown in the chart, an association process is performed when a user account is created. Also, in the example sequence shown in the chart, a user approval operation is performed when the secure element 113 is accessed.

The user attempts to log in to the first server 121 by inputting the user account information including the user ID and the password through a website operation (a browser or the like) function of the first authentication procedure processing unit 111 (SEQ701).

The first server 121 is a server holding the user account information, and performs an authentication process on the user account information including the user ID and the password transmitted from the first authentication procedure processing unit 111 (SEQ702). The first server 121 then returns the result of the authentication to the first authentication procedure processing unit 111, and the first authentication procedure processing unit 111 presents the received authentication result to the user (SEQ703). Note that, in a case where the authentication process fails, the first authentication procedure processing unit 111 may prompt the user to input the user ID and the password again. Here, for the sake of simplicity, the explanation is continued below on the assumption that the user account information has been successfully authenticated.

When the authentication process regarding the user account information at the time of the login is successful, the first server 121 requests the second authentication procedure processing unit 112 to perform a process of associating the user account information about the user with the SE identifier of the secure element 113 in the two-stage authentication using unidirectional communication such as SMS or Push communication (SEQ704).

The second authentication procedure processing unit 112 cooperates with a function capable of communicating from the user terminal 110 to the second server 122 (SEQ705). The second authentication procedure processing unit 112 also requests the user to approve an association process, by presenting a message such as "Is it OK to be associated with this terminal?" to the user through a user interface (UI), for example (SEQ706). Further, after an approval for the association process is obtained such as when the user replies "Yes" or the like (SEQ707), the second authentication procedure processing unit 112 accesses the secure element 113 to read the SE identifier (SEQ708), and then transmits the SE identifier to the second server 122 through secure communication using the private key stored in the secure element 113 (SEQ709).

The SE identifier of the secure element 113 may be generated at this timing, or may be embedded in the secure element 113 at the stage when the secure element 113 was manufactured.

The second server 122 holds a private key that can be authenticated with the secure element 113 by E2E. The second server 122 checks the authenticity of the SE identifier transmitted from the second authentication procedure processing unit 112 through secure communication using the private key stored therein (SEQ710). Further, when the authentication process regarding the SE identifier is successful, the second server 122 registers, in the association database 123, association information for associating the user account information (the user ID and the like) acquired by the first server 121 at the time of the login with the SE identifier acquired by the second server 122 during the two-stage authentication (SEQ711).

The association information registered in the association database 123 may be managed by either the first server 121 or the second server 122.

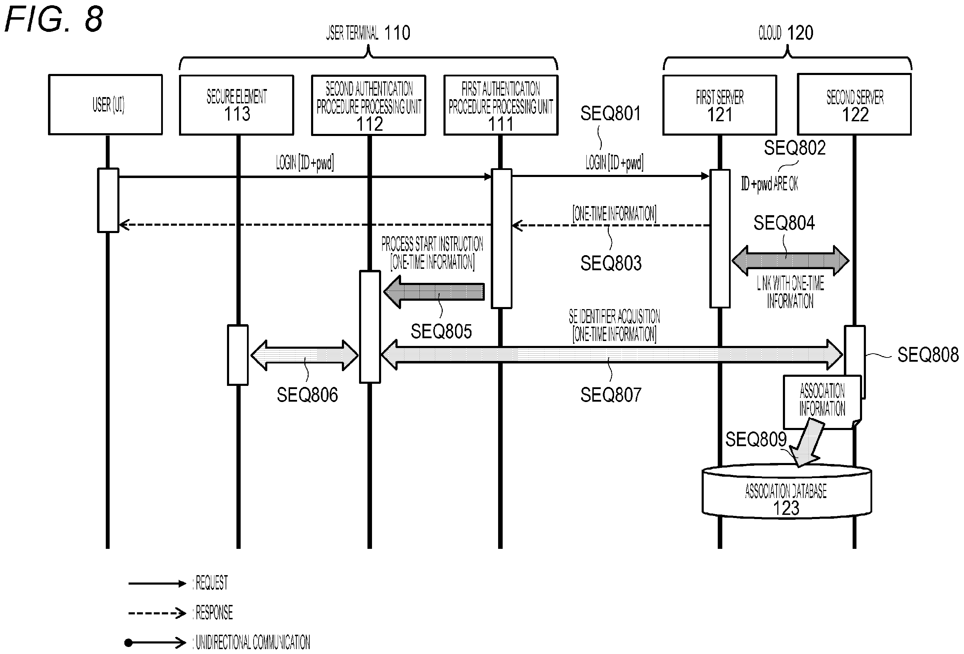

Fig. 8 shows another example sequence for performing an association process after creating the user account or logging in to the user account in the first phase. In the example sequence shown in the chart, a user approval operation is not performed when the secure element 113 is accessed.

The user attempts to log in to the first server 121 by inputting the user account information including the user ID and the password through a website operation (a browser or the like) function of the first authentication procedure processing unit 111 (SEQ801).

The first server 121 is a server holding the user account information, and performs an authentication process on the user account information including the user ID and the password transmitted from the first authentication procedure processing unit 111 (SEQ802). The first server 121 then returns the result of the authentication to the first authentication procedure processing unit 111, and the first authentication procedure processing unit 111 presents the received authentication result to the user. Note that, in a case where the authentication process fails, the first authentication procedure processing unit 111 may prompt the user to input the user ID and the password again. Here, for the sake of simplicity, the explanation is continued below on the assumption that the user account information has been successfully authenticated.

In the example sequence shown in Fig. 8, when the authentication process regarding the user account information at the time of the login is successful, the first server 121 adds one-time information such as a session ID to a reply including the authentication result to the first authentication procedure processing unit 111 (SEQ803). The first server 121 also links (shares) the one-time information with the second server 122 (SEQ804).

The first authentication procedure processing unit 111 instructs the second authentication procedure processing unit 112 to start a process on the secure element 113 (SEQ805) . In doing so, the first authentication procedure processing unit 111 notifies the second authentication procedure processing unit 112 of the one-time information given from the first server 121.

In the example sequence shown in Fig. 8, the second authentication procedure processing unit 112 starts the process on the secure element 113, without requesting an approval from the user. That is, after accessing the secure element 113 and reading the SE identifier (SEQ806), the second authentication procedure processing unit 112 adds the one-time information to the SE identifier, and sends the SE identifier to the second server 122 through secure communication using the private key stored in the secure element 113 (SEQ807).

The SE identifier of the secure element 113 may be generated at this timing, or may be embedded in the secure element 113 at the stage when the secure element 113 was manufactured.

The second server 122 holds a private key that can be authenticated with the secure element 113 by E2E. The second server 122 checks the authenticity of the SE identifier transmitted from the second authentication procedure processing unit 112 through secure communication using the private key stored therein (SEQ808). The second server 122 also determines whether the one-time information added to the SE identifier matches the one-time information linked with the first server 121, and checks whether the request is not a request for an association process from a third party impersonating the user.

Further, when the request is determined not to be a request from a third party, and the authentication process regarding the SE identifier is successful, the second server 122 registers, in the association database 123, association information for associating the user account information (the user ID and the like) acquired by the first server 121 at the time of the login with the SE identifier acquired by the second server 122 during the two-stage authentication (SEQ809).

The process of registering the association information in the association database 123, and the management of the association information registered in the association database 123 may be performed by either the first server 121 or the second server 122.

### D. Example Sequence in the Second Phase

In the second phase, in a case where the user makes a payment for online shopping or the like with the user terminal 110, for example, the value and the individual are identified with two factors in two stages using the user account information and the SE identifier associated with each other by the association database 123. The description below is based on the assumption that the process of associating the user account information with the SE identifier has already been completed in the first phase.

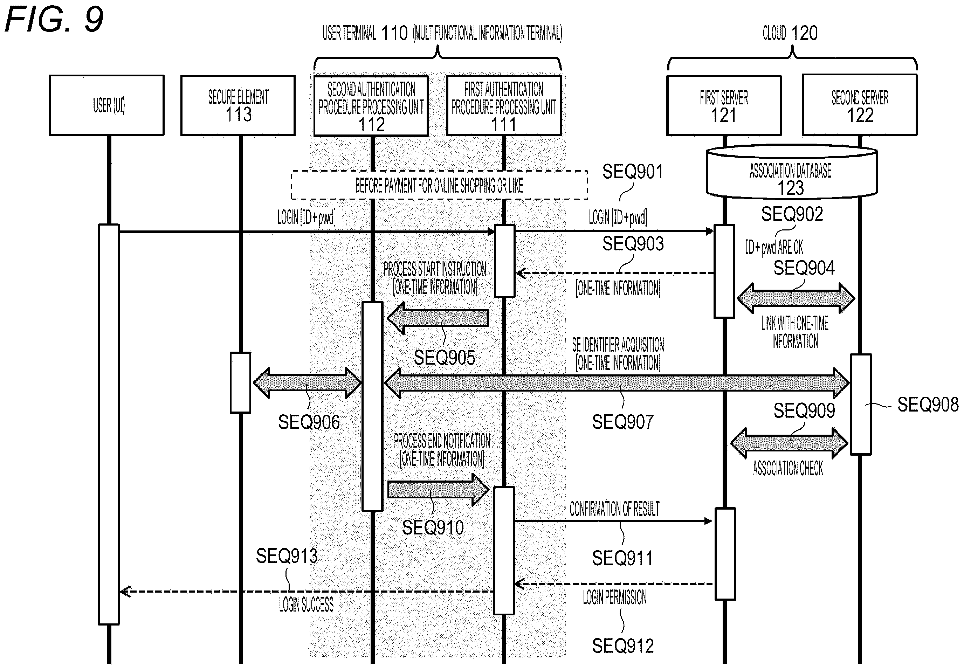

Fig. 9 shows an example sequence in the second phase. However, in the example sequence shown in the chart, the first authentication procedure processing unit 121 and the second authentication procedure processing unit 112 are included in the same terminal (including the example configuration shown in Fig. 3), and do not request an approval operation from the user. Further, the association information registered in the association database 123 may be managed by either the first server 121 or the second server 122.

The second phase is executed before payment for online shopping or the like. The user attempts to log in to the first server 121 by inputting the user account information including the user ID and the password on a UI screen or the like through a website operation (a browser or the like) function of the first authentication procedure processing unit 111 (SEQ901).

The first server 121 is a server holding the user account information, and performs an authentication process on the user account information including the user ID and the password transmitted from the first authentication procedure processing unit 111 (SEQ902). The first server 121 then adds one-time information such as a session ID to the authentication result, and returns the authentication result to the first authentication procedure processing unit 111 (SEQ903). The first server 121 also links (shares) the one-time information with the second server 122 (SEQ904). Note that, in a case where the authentication process fails, the first authentication procedure processing unit 111 may prompt the user to input the user ID and the password again. Here, for the sake of simplicity, the explanation is continued below on the assumption that the user account information has been successfully authenticated.

The first authentication procedure processing unit 111 instructs the second authentication procedure processing unit 112 to start a process on the secure element 113 (SEQ905). In doing so, the first authentication procedure processing unit 111 notifies the second authentication procedure processing unit 112 of the one-time information given from the first server 121.

The second authentication procedure processing unit 112 starts a process on the secure element 113. That is, after accessing the secure element 113 and reading the SE identifier (SEQ906), the second authentication procedure processing unit 112 adds the one-time information to the SE identifier, and sends the SE identifier to the second server 122 through secure communication using the private key stored in the secure element 113 (SEQ907).

The second server 122 holds a private key that can be authenticated with the secure element 113 by E2E. The second server 122 checks the authenticity of the SE identifier transmitted from the second authentication procedure processing unit 112 through secure communication using the private key stored therein, and acquires the accurate SE identifier (SEQ908). The second server 122 also determines whether the one-time information added to the SE identifier matches the one-time information linked with the first server 121, and checks whether the login is not a login from a third party impersonating the user.

Further, when the request is determined not to be a request from a third party, and the authentication process regarding the SE identifier is successful, the second server 122 checks whether the association information regarding the user account information about the user who is logging in with the same one-time information and the SE identifier is registered in the association database 123, in cooperation with the first server 121 (SEQ909). This check may be made by either the first server 121 or the second server 122. The result of this check is linked with the first server 121.

Here, if the association information regarding the user account information and the SE identifier is successfully confirmed in the association database 123, it is apparent that the user logging in to the first server 121 possesses the authentic secure element 113, and thus, the two-factor and two-stage authentication is considered successful. On the other hand, if the association information regarding the user account information and the SE identifier cannot be confirmed in the association database 123, the secure element 113 possessed by the user logging in to the first server 121 is not authentic, and therefore, the two-factor and two-stage authentication ends in failure. Here, the explanation is continued on the assumption that the two-factor and two-stage authentication is successful.

After that, the second authentication procedure processing unit 112 notifies the first authentication procedure processing unit 121 that the process regarding the secure element 113 has been completed, attaching the one-time information to the notification (SEQ910). In response to this notification, the first authentication procedure processing unit 121 confirms the result of the two-factor and two-stage authentication in the first server 121 (SEQ911). On the other hand, when the two-factor and two-stage authentication is successful, the first server 121 returns a login permission to the first authentication procedure processing unit 111 (SEQ912). The first authentication procedure processing unit 111 notifies the user of the successful login through a UI or the like (SEQ913).

In the sequence in the second phase as shown in Fig. 9, the SE identifier is confirmed between the user terminal 110 and the cloud 120 during one operation to log in to the first server 121 (a website) with the user terminal 110, from the viewpoint of the user. Accordingly, the user does not need to perform any special operation, and authentication using the two factors, which are the user account information and the secure element 113, is performed.

Note that there may be various sequences that can be performed between the user and the cloud 120 during a login operation, and various screen transitions during a login operation such as a login screen and a login success screen, but detailed explanation of them is not made herein.

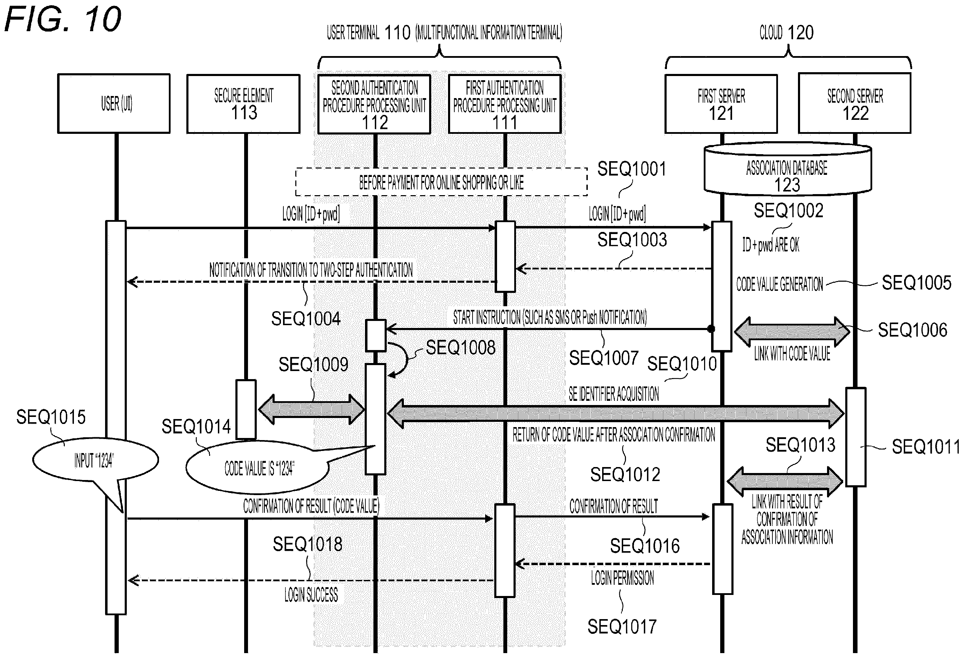

Fig. 10 shows another example sequence in the second phase. However, in the example sequence shown in the chart, the first authentication procedure processing unit 121 and the second authentication procedure processing unit 112 are included in the same terminal (including the example configuration shown in Fig. 3), and request an approval operation from the user. Further, the association information registered in the association database 123 may be managed by either the first server 121 or the second server 122.

The second phase is executed before payment for online shopping or the like. The user attempts to log in to the first server 121 by inputting the user account information including the user ID and the password on a UI screen or the like through a website operation (a browser or the like) function of the first authentication procedure processing unit 111 (SEQ1001).

The first server 121 is a server holding the user account information, and performs an authentication process on the user account information including the user ID and the password transmitted from the first authentication procedure processing unit 111 (SEQ1002). Note that, in a case where the authentication process fails, the first authentication procedure processing unit 111 may prompt the user to input the user ID and the password again. Here, for the sake of simplicity, the explanation is continued below on the assumption that the user account information has been successfully authenticated.

Next, the first server 121 returns the authentication result to the first authentication procedure processing unit 111 (SEQ1003). Upon receipt of the authentication result from the first server 121, the first authentication procedure processing unit 111 notifies the user to proceed to two-factor and two-stage authentication using the secure element 113, through a UI screen or the like (SEQ1004).

Also, after generating a code value (SEQ1005), the first server 121 links (shares) the code value with the second server 122 (SEQ1006). The first server 121 then instructs the second authentication procedure processing unit 122 to start a process for two-stage authentication, using unidirectional communication such as SMS or Push communication (SEQ1007).

The second authentication procedure processing unit 112 switches from the function of processing a SMS or Push notification to the function capable of communicating from the user terminal 110 to the second server 122 (SEQ1008). After accessing the secure element 113 and reading the SE identifier (SEQ1009), the second authentication procedure processing unit 112 then sends the SE identifier to the second server 122 through secure communication using the private key stored in the secure element 113 (SEQ1010).

The second server 122 holds a private key that can be authenticated with the secure element 113 by E2E. Using the private key held therein, the second server 122 checks the authenticity of the SE identifier transmitted from the second authentication procedure processing unit 112 through secure communication, and acquires the accurate SE identifier. Further, when the authentication process regarding the SE identifier is successful, the second server 122 checks whether the association information regarding the user account information about the user who is logging in and the SE identifier is registered in the association database 123 (SEQ1011). This check may be made by either the first server 121 or the second server 122. The result of this check is linked with the first server 121.

Here, if the association information regarding the user account information and the SE identifier is successfully confirmed in the association database 123, it is apparent that the user logging in to the first server 121 possesses the authentic secure element 113, and thus, the two-factor and two-stage authentication is considered successful. On the other hand, if the association information regarding the user account information and the SE identifier cannot be confirmed in the association database 123, the secure element 113 possessed by the user logging in to the first server 121 is not authentic, and therefore, the two-factor and two-stage authentication ends in failure. Here, the explanation is continued on the assumption that the two-factor and two-stage authentication is successful.

After confirming the association information regarding the user account information and the SE identifier in the association database 123, the second server 122 returns the code value (explained above) to be linked with the first server 121, to the second authentication procedure processing unit 112 (SEQ1012). The second server 122 also links (shares) the result of confirmation of the association information with the first server (SEQ1013).

The second authentication procedure processing unit 112 presents, to the user, a message such as "the code value is "1234"" for prompting the user to input the code value transmitted from the first server 121 through SMS or Push communication using a UI, for example, and thus, requests the user to approve a two-stage authentication process by inputting the code value (SEQ1014). After the user inputs the code value "1234", and an approval of the user is obtained (SEQ1015), the first authentication procedure processing unit 111 then assigns the code value input by the user to the first server 121, and confirms the result of the two-factor and two-stage authentication (SEQ1016). On the other hand, when the two-factor and two-stage authentication is successful, and the code value returned from the user terminal 110 is correct, the first server 121 returns a login permission to the first authentication procedure processing unit 111 (SEQ1017). The first authentication procedure processing unit 111 notifies the user of the successful login through a UI or the like (SEQ1018).

In the sequence in the second phase shown in Fig. 10, it is confirmed that the user is the owner of the secure element 113, on the assumption that the user possesses the authentic secure element 113. Also, in the sequence in the second phase shown in Fig. 10, it is possible to add an authentication function using the secure element 113, while maintaining the user operation procedures and the user experience in two-stage authentication such as SMS and Push notifications that are conventionally performed. Since any third party who does not possess the authentic secure element 113 is not notified of the code value, the security level is higher than that of two-stage authentication using SMS, e-mail, or Push. In the example sequence shown in Fig. 10, the SE identifier is also confirmed between the user terminal 110 and the cloud 120 during one operation to log in to the first server 121 (a website) with the user terminal 110, from the viewpoint of the user. Accordingly, the user does not need to perform any special operation, and authentication using the two factors, which are the user account information and the secure element 113, is performed.

Note that there may be various sequences that can be performed between the user and the cloud 120 during a login operation, and various screen transitions during a login operation such as a login screen and a login success screen, but detailed explanation of them is not made herein.

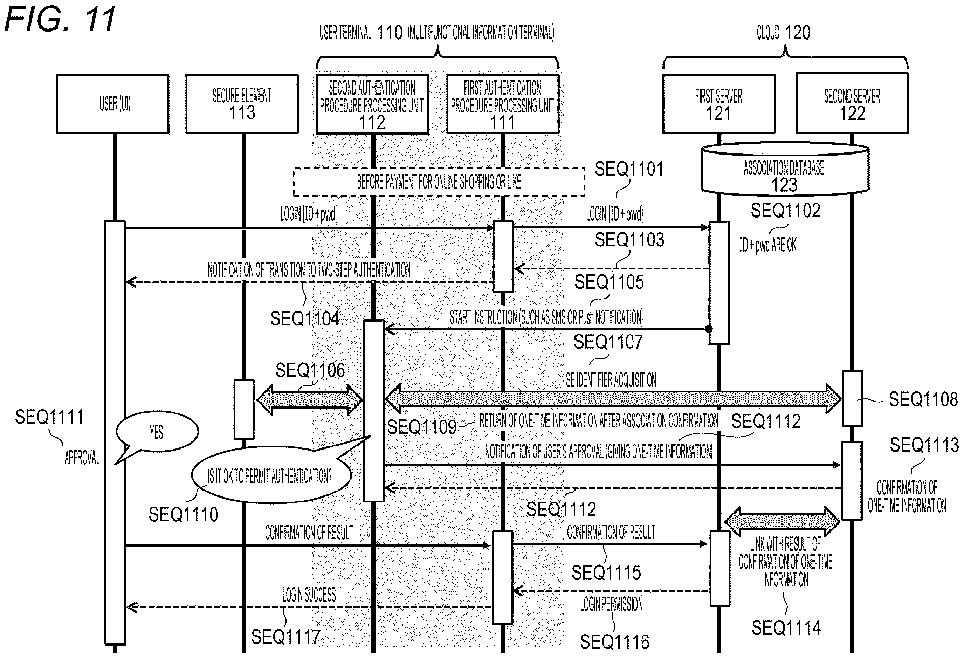

Fig. 11 shows yet another example sequence in the second phase. However, in the example sequence shown in the chart, the first authentication procedure processing unit 121 and the second authentication procedure processing unit 112 are included in the same terminal (including the example configuration shown in Fig. 3), and request an approval operation from the user. Further, the association information registered in the association database 123 may be managed by either the first server 121 or the second server 122.

The second phase is executed before payment for online shopping or the like. The user attempts to log in to the first server 121 by inputting the user account information including the user ID and the password on a UI screen or the like through a website operation (a browser or the like) function of the first authentication procedure processing unit 111 (SEQ1101).

The first server 121 is a server holding the user account information, and performs an authentication process on the user account information including the user ID and the password transmitted from the first authentication procedure processing unit 111 (SEQ1102). Note that, in a case where the authentication process fails, the first authentication procedure processing unit 111 may prompt the user to input the user ID and the password again. Here, for the sake of simplicity, the explanation is continued below on the assumption that the user account information has been successfully authenticated.

Next, the first server 121 returns the authentication result to the first authentication procedure processing unit 111 (SEQ1103). Upon receipt of the authentication result from the first server 121, the first authentication procedure processing unit 111 notifies the user to proceed to two-factor and two-stage authentication using the secure element 113, through a UI screen or the like (SEQ1104). The first server 121 then instructs the second authentication procedure processing unit 122 to start a process for two-stage authentication, using unidirectional communication such as SMS or Push communication (SEQ1105).

After accessing the secure element 113 and reading the SE identifier (SEQ1106), the second authentication procedure processing unit 112 sends the SE identifier to the second server 122 through secure communication using the private key stored in the secure element 113 (SEQ1107).

The second server 122 holds a private key that can be authenticated with the secure element 113 by E2E. Using the private key held therein, the second server 122 checks the authenticity of the SE identifier transmitted from the second authentication procedure processing unit 112 through secure communication, and acquires the accurate SE identifier. Further, when the authentication process regarding the SE identifier is successful, the second server 122 checks whether the association information regarding the user account information about the user who is logging in and the SE identifier is registered in the association database 123 (SEQ1108). This check may be made by either the first server 121 or the second server 122.

Here, if the association information regarding the user account information and the SE identifier is successfully confirmed in the association database 123, it is apparent that the user logging in to the first server 121 possesses the authentic secure element 113, and thus, the two-factor and two-stage authentication is considered successful. On the other hand, if the association information regarding the user account information and the SE identifier cannot be confirmed in the association database 123, the secure element 113 possessed by the user logging in to the first server 121 is not authentic, and therefore, the two-factor and two-stage authentication ends in failure. Here, the explanation is continued on the assumption that the two-factor and two-stage authentication is successful.

After confirming the association information regarding the user account information and the SE identifier in the association database 123, the second server 122 returns one-time information (explained above) such as a session ID to the second authentication procedure processing unit 112 (SEQ1109).

The second authentication procedure processing unit 112 requests the user to approve an association process, by presenting a message such as "Is it OK to permit authentication?" to the user through a UI, for example (SEQ1110). After an approval of the authentication process is obtained such as when the user replies "Yes" (SEQ1111), the second authentication procedure processing unit 112 then notifies the second server 122 that the user has approved, giving one-time information (SEQ1112).

The second server 122 determines whether the one-time information added to the approval notification returned from the second authentication procedure processing unit 112 is correct, and checks whether the approval is not an approval by a third party impersonating the user (SEQ1113). The second server 122 also links the result of confirmation of the one-time information with the first server 121 (SEQ1114).

On the side of the user terminal 110, after the user permits authentication, the first authentication procedure processing unit 111 confirms the result of the two-factor and two-stage authentication in the first server 121 (SEQ1115). On the other hand, when the two-factor and two-stage authentication is successful, and the one-time information returned from the user terminal 110 is correct, the first server 121 returns a login permission to the first authentication procedure processing unit 111 (SEQ1116). The first authentication procedure processing unit 111 notifies the user of the successful login through a UI or the like (SEQ1117).

In the sequence in the second phase shown in Fig. 11, it is confirmed that the user is the owner of the secure element 113, on the assumption that the user possesses the authentic secure element 113. Also, in the sequence in the second phase shown in Fig. 11, it is possible to add an authentication function using the secure element 113, while maintaining the user operation procedures and the user experience in two-stage authentication such as SMS and Push notifications that are conventionally performed. Since any third party who does not possess the authentic secure element 113 is not notified of the one-time information, the security level is higher than that of two-stage authentication using SMS, e-mail, or Push. In the example sequence shown in Fig. 11, the SE identifier is also confirmed between the user terminal 110 and the cloud 120 during one operation to log in to the first server 121 (a website) with the user terminal 110, from the viewpoint of the user. Accordingly, the user does not need to perform any special operation, and authentication using the two factors, which are the user account information and the secure element 113, is performed.

Note that there may be various sequences that can be performed between the user and the cloud 120 during a login operation, and various screen transitions during a login operation such as a login screen and a login success screen, but detailed explanation of them is not made herein.

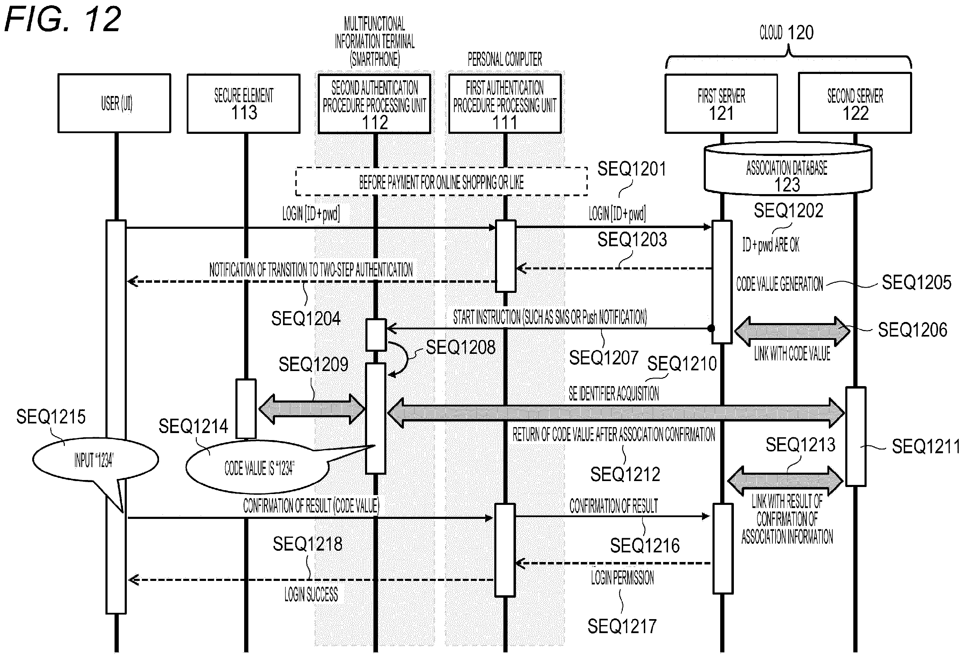

Fig. 12 shows still another example sequence in the second phase. However, in the example sequence shown in the chart, the first authentication procedure processing unit 121 and the second authentication procedure processing unit 112 are disposed in different devices (including the example configurations shown in Figs. 4 and 5), and request an approval operation from the user. Further, the association information registered in the association database 123 may be managed by either the first server 121 or the second server 122.

The second phase is executed before payment for online shopping or the like. The user attempts to log in to the first server 121 by inputting the user account information including the user ID and the password on a UI screen such as a display through a website operation (a browser or the like) function of a personal computer (the first authentication procedure processing unit 111), using a keyboard, a mouse, or the like (SEQ1201).

The first server 121 is a server holding the user account information, and performs an authentication process on the user account information including the user ID and the password transmitted from the personal computer (SEQ1202). Note that, in a case where the authentication process fails, the personal computer may prompt the user to input the user ID and the password again. Here, for the sake of simplicity, the explanation is continued below on the assumption that the user account information has been successfully authenticated.

Next, the first server 121 returns the authentication result to the personal computer (SEQ1203). Upon receipt of the authentication result from the first server 121, the personal computer notifies the user to proceed to two-factor and two-stage authentication using the secure element 113, through a UI screen such as a display (SEQ1204).

Also, after generating a code value (SEQ1205), the first server 121 links (shares) the code value with the second server 122 (SEQ1206). The first server 121 then instructs a multifunctional information terminal (the second authentication procedure processing unit 122) to start a process for two-stage authentication, using unidirectional communication such as SMS or Push communication (SEQ1207).

The multifunctional information terminal switches from the function of processing a SMS or Push notification to the function capable of communicating with the second server 122 (SEQ1208). After accessing the secure element 113 and reading the SE identifier (SEQ1209), the multifunctional information terminal then sends the SE identifier to the second server 122 through secure communication using the private key stored in the secure element 113 (SEQ1210). Note that, in a case where the secure element 113 is included in the multifunctional information terminal (see Fig. 4), the second authentication procedure processing unit 112 in the multifunctional information terminal accesses the secure element 113 via an internal line. Further, in a case where the secure element 113 is designed as a device separated from the multifunctional information terminal, such as a contactless IC card (see Fig. 5), for example, the second authentication procedure processing unit 112 in the multifunctional information terminal accesses the secure element 113, using contactless communication compliant with the NFC communication scheme or the like.

The second server 122 holds a private key that can be authenticated with the secure element 113 by E2E. Using the private key held therein, the second server 122 checks the authenticity of the SE identifier transmitted from the multifunctional information terminal through secure communication, and acquires the accurate SE identifier. Further, when the authentication process regarding the SE identifier is successful, the second server 122 checks whether the association information regarding the user account information about the user who is logging in and the SE identifier is registered in the association database 123 (SEQ1211). This check may be made by either the first server 121 or the second server 122. The result of this check is linked with the first server 121.

Here, if the association information regarding the user account information and the SE identifier is successfully confirmed in the association database 123, it is apparent that the user who is logging in to the first server 121 from the personal computer possesses the authentic secure element 113, and thus, the two-factor and two-stage authentication is considered successful. On the other hand, if the association information regarding the user account information and the SE identifier cannot be confirmed in the association database 123, the secure element 113 possessed by the user who is logging in to the first server 121 from the personal computer is not authentic, and therefore, the two-factor and two-stage authentication ends in failure. Here, the explanation is continued on the assumption that the two-factor and two-stage authentication is successful.

After confirming the association information regarding the user account information and the SE identifier in the association database 123, the second server 122 returns the code value (explained above) to be linked with the first server 121, to the multifunctional information terminal (SEQ1212). The second server 122 also links (shares) the result of confirmation of the association information with the first server (SEQ1213).

The multifunctional information terminal displays, on a touch panel, for example, a message such as "the code value is "1234"" for prompting the user to input the code value transmitted from the first server 121 through SMS or Push communication, and thus, requests the user to approve a two-stage authentication process by inputting the code value (SEQ1214). After the user inputs the code value "1234" using a keyboard or a mouse on the personal computer, and an approval of the user is obtained (SEQ1215), the personal computer then assigns the code value input by the user to the first server 121, and confirms the result of the two-factor and two-stage authentication (SEQ1216). On the other hand, when the two-factor and two-stage authentication is successful, and the code value returned from the user terminal 110 is correct, the first server 121 returns a login permission to the personal computer (SEQ1217). The personal computer notifies the user of the successful login through a UI such as a display (SEQ1218).

In the sequence in the second phase shown in Fig. 12, it is confirmed that the user is the owner of the secure element 113, on the assumption that the user possesses a multifunctional information terminal containing the authentic secure element 113, or possesses a contactless IC card equipped with the authentic secure element 113. Also, in the sequence in the second phase shown in Fig. 12, it is possible to add an authentication function using the secure element 113, while maintaining the user operation procedures and the user experience in two-stage authentication such as SMS and Push notifications that are conventionally performed. Since any third party who does not possess the authentic secure element 113 is not notified of the code value, the security level is higher than that of two-stage authentication using SMS, e-mail, or Push. In the example sequence shown in Fig. 12, the SE identifier is also confirmed between the user terminal 110 and the cloud 120 during one operation to log in to the first server 121 (a website) with the user terminal 110, from the viewpoint of the user. Accordingly, the user does not need to perform any special operation, and authentication using the two factors, which are the user account information and the secure element 113, is performed.

Note that there may be various sequences that can be performed between the user and the cloud 120 during a login operation, and various screen transitions during a login operation such as a login screen and a login success screen, but detailed explanation of them is not made herein.

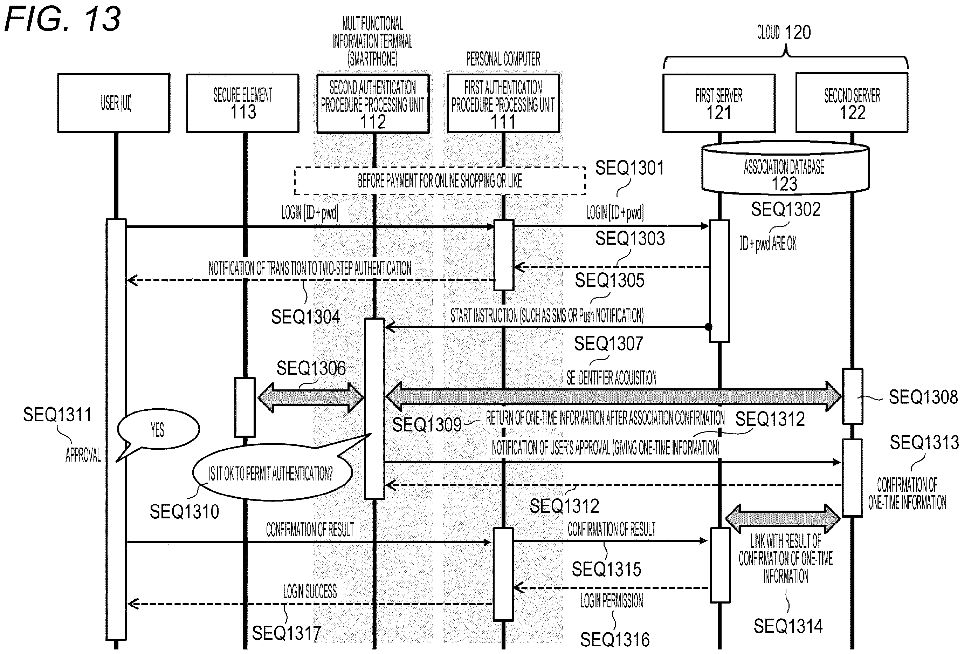

Fig. 13 shows yet another example sequence in the second phase. However, in the example sequence shown in the chart, the first authentication procedure processing unit 121 and the second authentication procedure processing unit 112 are disposed in different devices (including the example configurations shown in Figs. 4 and 5), and request an approval operation from the user. Further, the association information registered in the association database 123 may be managed by either the first server 121 or the second server 122.

The second phase is executed before payment for online shopping or the like. The user attempts to log in to the first server 121 by inputting the user account information including the user ID and the password on a UI screen such as a display through a website operation (a browser or the like) function of a personal computer (the first authentication procedure processing unit 111), for example (SEQ1301).

The first server 121 is a server holding the user account information, and performs an authentication process on the user account information including the user ID and the password transmitted from the personal computer (SEQ1302). Note that, in a case where the authentication process fails, the personal computer may prompt the user to input the user ID and the password again on a UI screen or the like. Here, for the sake of simplicity, the explanation is continued below on the assumption that the user account information has been successfully authenticated.

Next, the first server 121 returns the authentication result to the personal computer (SEQ1303). Upon receipt of the authentication result from the first server 121, the personal computer notifies the user to proceed to two-factor and two-stage authentication using the secure element 113, through a UI screen such as a display (SEQ1304). The first server 121 then instructs a multifunctional information terminal (the second authentication procedure processing unit 122) to start a process for two-stage authentication, using unidirectional communication such as SMS or Push communication (SEQ1305).

After accessing the secure element 113 and reading the SE identifier (SEQ1306), the multifunctional information terminal sends the SE identifier to the second server 122 through secure communication using the private key stored in the secure element 113 (SEQ1307). Note that, in a case where the secure element 113 is included in the multifunctional information terminal (see Fig. 4), the second authentication procedure processing unit 112 in the multifunctional information terminal accesses the secure element 113 via an internal line. Further, in a case where the secure element 113 is designed as a device separated from the multifunctional information terminal, such as a contactless IC card (see Fig. 5), for example, the second authentication procedure processing unit 112 in the multifunctional information terminal accesses the secure element 113, using contactless communication compliant with the NFC communication scheme or the like.

The second server 122 holds a private key that can be authenticated with the secure element 113 by E2E. Using the private key held therein, the second server 122 checks the authenticity of the SE identifier transmitted from the multifunctional information terminal through secure communication, and acquires the accurate SE identifier. Further, when the authentication process regarding the SE identifier is successful, the second server 122 checks whether the association information regarding the user account information about the user who is logging in from the personal computer and the SE identifier is registered in the association database 123 (SEQ1308). This check may be made by either the first server 121 or the second server 122. The result of this check is linked with the first server 121.

Here, if the association information regarding the user account information and the SE identifier is successfully confirmed in the association database 123, it is apparent that the user who is logging in to the first server 121 from the personal computer possesses the authentic secure element 113, and thus, the two-factor and two-stage authentication is considered successful. On the other hand, if the association information regarding the user account information and the SE identifier cannot be confirmed in the association database 123, the secure element 113 possessed by the user who is logging in to the first server 121 from the personal computer is not authentic, and therefore, the two-factor and two-stage authentication ends in failure. Here, the explanation is continued on the assumption that the two-factor and two-stage authentication is successful.

After confirming the association information regarding the user account information and the SE identifier in the association database 123, the second server 122 returns one-time information (explained above) such as a session ID to the multifunctional information terminal (SEQ1309).

The multifunctional information terminal requests the user to approve an association process, by presenting a message such as "Is it OK to permit authentication?" to the user through a UI such as a touch panel (SEQ1310). After an approval of the authentication process is obtained such as when the user replies "Yes" (SEQ1311), the multifunctional information terminal then notifies the second server 122 that the user has approved, giving one-time information (SEQ1312).

The second server 122 determines whether the one-time information added to the approval notification returned from the multifunctional information terminal is correct, and checks whether the approval is not an approval by a third party impersonating the user (SEQ1313). The second server 122 also links the result of confirmation of the one-time information with the first server 121 (SEQ1314).

After the user permits authentication, the personal computer confirms the result of the two-factor and two-stage authentication in the first server 121 (SEQ1315). On the other hand, when the two-factor and two-stage authentication is successful, and the one-time information returned from the multifunctional information terminal is correct, the first server 121 returns a login permission to the personal computer (SEQ1316). The personal computer notifies the user of the successful login through a UI such as a display (SEQ1317).

In the sequence in the second phase shown in Fig. 13, it is confirmed that the user is the owner of the secure element 113, on the assumption that the user possesses the authentic secure element 113. Also, in the sequence in the second phase shown in Fig. 13, it is possible to add an authentication function using the secure element 113, while maintaining the user operation procedures and the user experience in two-stage authentication such as SMS and Push notifications that are conventionally performed. Since any third party who does not possess the authentic secure element 113 is not notified of the one-time information, the security level is higher than that of two-stage authentication using SMS, e-mail, or Push. In the example sequence shown in Fig. 13, the SE identifier is also confirmed between the user terminal 110 and the cloud 120 during one operation to log in to the first server 121 (a website) with the user terminal 110, from the viewpoint of the user. Accordingly, the user does not need to perform any special operation, and authentication using the two factors, which are the user account information and the secure element 113, is performed.

Note that there may be various sequences that can be performed between the user and the cloud 120 during a login operation, and various screen transitions during a login operation such as a login screen and a login success screen, but detailed explanation of them is not made herein.

### INDUSTRIAL APPLICABILITY

The present disclosure has been described in detail so far, with reference to specific embodiments. However, it is obvious that those skilled in the art can make modifications to and substitutions of the embodiments without departing from the scope of the present disclosure.

The present disclosure can be applied to an action (a login) for identifying a value or an individual in a cloud in various scenes such as a time of payment for Internet shopping, and can provide robust authentication of a user who possesses a secure element.

In the present specification, embodiments in which two-stage authentication is performed in the order of authentication based on user account information and authentication using a secure element have been mainly described, but the order may be reversed. Also, authentication using a secure element may be combined with two or more other factors, and multistage authentication may be performed in any appropriate order.

In short, the present disclosure has been described through examples, and the descriptions in this specification should not be interpreted in a restrictive manner. The claims should be taken into account in understanding the subject matter of the present disclosure.

Note that the present disclosure may also be embodied in the configurations described below.
(1) An information processing apparatus including:
   an authentication procedure processing unit that performs an authentication procedure on an external device, using a tamper-resistant secure element; and
   a control unit that controls a process for multistage authentication of the external device, the multistage authentication including the authentication procedure.
(2) The information processing apparatus according to claim 1, in which
   the control unit controls a process for multistage authentication including a login authentication procedure using user account information and an authentication procedure using the secure element.
(3) The information processing apparatus according to claim 2, in which
   the control unit controls a process of a second authentication procedure using identification information about the secure element, the identification information being associated with the user account information.
(4) The information processing apparatus according to claim 3, in which,
   in the process of the second authentication procedure, the control unit uses the identification information about the secure element, the identification information being associated with the user account information in a preliminary operation.
(5) The information processing apparatus according to claim 3, in which,
   before the second authentication procedure, the control unit performs control to perform a process of associating the identification information about the secure element with the user account information.
(6) The information processing apparatus according to any one of claims 3 to 5, in which
   the control unit performs control to carry out the second authentication procedure during an operation in the login authentication procedure.
(7) The information processing apparatus according to any one of claims 3 to 6, in which
   the control unit further controls a process of requesting an approval operation regarding the second authentication procedure from a user.
(8) The information processing apparatus according to claim 7, in which
   the control unit performs control to present, to the user, a code value returned from the external device that has confirmed the association, and transmit, to the external device, the code value input from the user in response to the presentation.
(9) The information processing apparatus according to claim 7, in which
   the control unit performs control to notify the external device of a result of the user's approval operation, together with one-time information returned from the external device that has confirmed the association.
(10) The information processing apparatus according to any one of claims 2 to 9, further including
   a first authentication procedure processing unit that performs the login authentication procedure.
(11) The information processing apparatus according to any one of claims 1 to 10, further including
   the secure element.
(12) The information processing apparatus according to any one of claims 1 to 10, further including
   a communication unit that communicates with the secure element.
(13) An information processing method including
   the step of performing an authentication procedure on an external device by using a tamper-resistant secure element, in conjunction with a login authentication procedure using user account information.
(13-1) The information processing method according to (13), in which
   the authentication procedure is performed using identification information about the secure element, the identification information being associated with the user account information.
(13-2) The information processing method according to (13), further including
   the step of associating the identification information about the secure element with the user account information, before the authentication procedure.
(14) A computer program that is written in a computer-readable format to cause a computer to function as:
   an authentication procedure processing unit that performs an authentication procedure on an external device, using a tamper-resistant secure element; and
   a control unit that controls a process for multistage authentication of the external device, the multistage authentication including the authentication procedure.
(15) An authentication device including:
   an authentication unit that performs authentication on a secure element of a user who logs in to a first device; and
   a confirmation unit that confirms association between identification information about the secure element that is successfully authenticated and user account information about the user.
(15-1) The authentication device according to (15), in which,
   when association between the identification information about the secure element and the user account information about the user is successfully confirmed, the user is permitted to log in to the first device.
(15-2) The authentication device according to (15), in which
   the confirmation unit performs the confirmation on the basis of a management device that stores association information regarding the user account information about the user and the identification information about the secure element.
(15-3) The authentication device according to (15-2), further including
   a registration unit that registers, in the management device, the association information regarding the user account information about the user who logs in to the first device and the identification information about the secure element of the user.
(15-4) The authentication device according to (15-3), in which
   the registration unit registers the association information at a time of creation of the user account information.
(15-5) The authentication device according to (15), in which
   the confirmation unit further requests an approval operation from the user with respect to authentication using the secure element.
(15-6) The authentication device according to (15-5), in which
   the confirmation unit transmits a code value for requesting the user to input when association between the user account information and the identification information about the secure element is successfully confirmed, and permits the user to log in to the first device when the correct code value is returned from the user.
(15-7) The authentication device according to (15-5), in which
   the confirmation unit transmits one-time information to the user when association between the user account information and the identification information about the secure element is successfully confirmed, and permits the user to log in to the first device when the correct one-time information is attached to a result of the user's approval.
(16) An authentication method including:
   an authentication step of performing authentication on a secure element of a user who logs in to a first device; and
   a confirmation step of confirming association between identification information about the secure element that is successfully authenticated and user account information about the user.
(17) A computer program that is written in a computer-readable format to cause a computer to function as:
   an authentication unit that performs authentication on a secure element of a user who logs in to a first device; and
   a confirmation unit that confirms association between identification information about the secure element that is successfully authenticated and user account information about the user.
(18) An authentication system including:
   an information terminal of a user who possesses a tamper-resistant secure element; and
   an authentication device that authenticates the user,
   in which, when the user logs in to a first device, the authentication device confirms authentication of the secure element, and association between the secure element and user account information about the user.
(18-1) The authentication system according to (18), in which,
   when association between the identification information about the secure element and the user account information about the user is successfully confirmed, the user is permitted to log in to the first device.
(18-2) The authentication system according to (18), further including
   a management device that stores association information regarding the user account information about the user and the identification information about the secure element,
   in which the authentication device performs the confirmation on the basis of the management device.
(18-3) The authentication system according to (18-2), in which
   the authentication device performs a process of registering, in the management device, the association information regarding the user account information about the user who logs in to the first device and the identification information about the secure element of the user.
(18-4) The authentication system according to (18-3), in which
   the authentication device registers the association information at a time of creation of the user account information.
(18-5) The authentication system according to (18), in which
   the authentication device further requests an approval operation from the user with respect to authentication using the secure element.
(18-6) The authentication system according to (18-5), in which
   the authentication device transmits, to the information terminal, a code value for requesting the user to input when association between the user account information and the identification information about the secure element is successfully confirmed, and permits the user to log in to the first device when the correct code value is returned from the information terminal.
(18-7) The authentication system according to (18-5), in which
   the authentication device transmits one-time information to the information terminal when association between the user account information and the identification information about the secure element is successfully confirmed, and permits the user to log in to the first device when the correct one-time information is attached to a result of the user's approval from the information terminal.
(19) An authentication method implemented in an authentication system that includes: an information terminal of a user who possesses a tamper-resistant secure element; and an authentication device that authenticates the user,
   the authentication method including:
   an authentication step in which the authentication device authenticates the secure element of the user who logs in to a first device; and
   a confirmation step in which the authentication device confirms association between identification information about the secure element that is successfully authenticated and user account information about the user.

### REFERENCE SIGNS LIST

- 100: User authentication system
- 110: User terminal
- 111: First authentication procedure processing unit
- 112: Second authentication procedure processing unit
- 113: Secure element
- 114: Control unit
- 115: Communication unit
- 120: Cloud
- 121: First server
- 122: Second server
- 123: Association database
- 301: Multifunctional information terminal
- 302: Contactless IC card
- 401: Personal computer
- 402: Multifunctional information terminal
- 501: Personal computer
- 502: Multifunctional information terminal
- 503: Secure element

## Claims

1. An information processing apparatus comprising:
an authentication procedure processing unit that performs an authentication procedure on an external device, using a secure element that has tamper-resistance; and
a control unit that controls a process for multistage authentication of the external device, the multistage authentication including the authentication procedure.

2. The information processing apparatus according to claim 1, wherein
the control unit controls a process for multistage authentication including a login authentication procedure using user account information and an authentication procedure using the secure element.

3. The information processing apparatus according to claim 2, wherein
the control unit controls a process of a second authentication procedure using identification information about the secure element, the identification information being associated with the user account information.

4. The information processing apparatus according to claim 3, wherein,
in the process of the second authentication procedure, the control unit uses the identification information about the secure element, the identification information being associated with the user account information in a preliminary operation.

5. The information processing apparatus according to claim 3, wherein,
before the second authentication procedure, the control unit performs control to perform a process of associating the identification information about the secure element with the user account information.

6. The information processing apparatus according to claim 3, wherein
the control unit performs control to carry out the second authentication procedure during an operation in the login authentication procedure.

7. The information processing apparatus according to claim 3, wherein
the control unit further controls a process of requesting an approval operation regarding the second authentication procedure from a user.

8. The information processing apparatus according to claim 7, wherein
the control unit performs control to present, to the user, a code value returned from the external device that has confirmed the association, and transmit, to the external device, the code value input from the user in response to the presentation.

9. The information processing apparatus according to claim 7, wherein
the control unit performs control to notify the external device of a result of the user's approval operation, together with one-time information returned from the external device that has confirmed the association.

10. The information processing apparatus according to claim 2, further comprising
a first authentication procedure processing unit that performs the login authentication procedure.

11. The information processing apparatus according to claim 1, further comprising
the secure element.

12. The information processing apparatus according to claim 1, further comprising
a communication unit that communicates with the secure element.

13. An information processing method comprising
a step of performing an authentication procedure on an external device by using a secure element having tamper-resistance, in conjunction with a login authentication procedure using user account information.

14. A computer program that is written in a computer-readable format to cause a computer to function as:
an authentication procedure processing unit that performs an authentication procedure on an external device, using a secure element that has tamper-resistance; and
a control unit that controls a process for multistage authentication of the external device, the multistage authentication including the authentication procedure.

15. An authentication device comprising:
an authentication unit that performs authentication on a secure element of a user who logs in to a first device; and
a confirmation unit that confirms association between identification information about the secure element that is successfully authenticated and user account information about the user.

16. An authentication method comprising:
an authentication step of performing authentication on a secure element of a user who logs in to a first device; and
a confirmation step of confirming association between identification information about the secure element that is successfully authenticated and user account information about the user.

17. A computer program that is written in a computer-readable format to cause a computer to function as:
an authentication unit that performs authentication on a secure element of a user who logs in to a first device; and
a confirmation unit that confirms association between identification information about the secure element that is successfully authenticated and user account information about the user.

18. An authentication system comprising:
an information terminal of a user who possesses a secure element that has tamper-resistance; and
an authentication device that authenticates the user,
wherein, when the user logs in to a first device, the authentication device confirms authentication of the secure element, and association between the secure element and user account information about the user.

19. An authentication method implemented in an authentication system that includes: an information terminal of a user who possesses a secure element that has tamper-resistance; and an authentication device that authenticates the user,
the authentication method comprising:
an authentication step in which the authentication device authenticates the secure element of the user who logs in to a first device; and
a confirmation step in which the authentication device confirms association between identification information about the secure element that is successfully authenticated and user account information about the user.
